# EUROPÄISCHE PATENTANMELDUNG

(11) **EP 1 538 720 A1**
(43) Veröffentlichungstag der Anmeldung: **08.06.2005**
(21) Anmeldenummer: 04026663.7
(22) Anmeldetag: 10.11.2004
(51) Int. Cl.: H02G 3/18

(54) **Anschlusssystem für die Unterflurverkabelung von Starkstromnetzen**

(30) Priorität: 06.12.2003 DE 20318952 U
(71) Anmelder: Tehalit GmbH, 67716 Heltersberg (DE)
(72) Erfinder: Kauf, Peter, 66482 Zweibrücken (DE); Szabo, Thomas, 66849 Landstuhl (DE); Schneckmann, Horst, 67705 Trippstadt (DE)
(74) Vertreter: Patentanwälte Möll und Bitterich

(57) **Zusammenfassung**

Gegenstand der Erfindung ist ein Anschlusssystem für die Unterflurverkabelung von Starkstromnetzen. Vorgesehen ist ein Anschlussmodul (10) mit einem zwei- oder mehrteiligen Gehäuse (11, 14), mit Starkstrom-Steckdosen (12) und mit angeformten Halterungen (15, 15'). An wenigstens einer Stirnseite des Anschlussmoduls (10) ist wenigstens ein Anschlussstecker (16) für ein konfektioniertes Kabel (1, 2) zur Verbindung mit der Gebäudeinstallation vorgesehen.

## Beschreibung

Die Erfindung betrifft Anschlusssysteme für die Unterflurverkabelung von Starkstromnetzen gemäß dem Oberbegriff des Anspruchs 1.

Beim Neubau von Wohn- und Bürogebäuden wird zunächst der Rohbau erstellt, bestehend aus Wänden, Decken und Böden. Anschließend folgt der Innenausbau. Dazu gehören die Installationsarbeiten für Heizung, Wasser, Elektro usw. Ein Teil der Versorgungsleitungen wird auf dem Rohboden verlegt, bevor Bodendämmung und Estrich eingebracht werden.

Speziell für Bürogebäude gibt es Doppelböden. Man vergleiche die DE 195 04 349 C bzw. die DE 39 06 317 A. Für solche Doppelböden gibt es spezielle Installationssysteme. An bestimmten Stellen werden im Doppelboden Anschlussboxen eingesetzt, die mit einer trittfesten Klappe verschlossen werden können. Hinter der Klappe sind Steckdosen, Sicherungen usw. geschützt untergebracht. Weil die Kabel und Leitungen im Zwischenboden völlig frei verlegt sind, lassen sich die Anschlussboxen innerhalb des Fußbodenrasters beliebig versetzen.

Aus der DE 202 04 093 U ist ein Anschlusssystem für Unterflurverkabelungen von Telekommunikations- und Datennetzen bekannt. In einem Unterflurtank sind Becher eingesetzt, die einen langgestreckten, quaderförmigen Aufnahmeraum aufweisen. An den Längswänden des Aufnahmeraums sind in einem Raster vertikale Führungen angeordnet. In diese Führungen sind Modulträger einsetzbar, die die eigentlichen Anschlussmodule aufnehmen. Diese Module umfassen Datensteckdosen, die auf ihrer dem Benutzer zugewandten Vorderseite genormte Steckbuchsen und auf ihrer Rückseite Anschlussvorrichtungen für die Enden von Daten- und Telekommunikationskabeln besitzen.

Aus der EP 1 191 656 A ist eine weitere Geräteaufnahme für eine Unterflurgerätedose bekannt. Die Geräteaufnahme besitzt eine rahmenförmig umlaufende Wandung mit Führungen und einem Befestigungsrahmen zum Schrägeinbau von Verbindern. Oberhalb der Verbinder sind eine Haube mit einer Aussparung und ein Träger mit Führungen vorgesehen, wobei der Befestigungsrahmen in einer die Aussparung wenigstens teilweise abdeckenden Weise an der Haube befestigbar ist. Die Haube ist in die Führungen des Trägers einschiebbar und mit diesen verrastbar.

Aus der DE 195 01 339 C ist ein Gerätebecher für Unterflurgerätedosen bekannt, der mit Steckdosen für Starkstrom ausgerüstet ist. Die Frontplatte mit den eingeformten Steckdosentöpfen ist aufklappbar, wodurch das Becherinnere für die elektrischen Verdrahtungsarbeiten zugänglich wird. Die Verdrahtung selbst erfolgt in herkömmlicher Weise durch Einziehen der Kabel in den Gerätebecher und Anklemmen der abisolierten Leiterenden an die Anschlusskontakte der Steckdosen. Diese Vorgehensweise ist nicht nur zeitaufwändig, sondern darf wegen der zu beachtenden Vorschriften über die elektrische Sicherheit nur von Fachpersonal durchgeführt werden. Dies macht diese Installationstechnik zeit- und kostenaufwändig. Das ist unbefriedigend.

Der vorliegenden Erfindung liegt daher die Aufgabe zugrunde, ein Anschlusssystem für die Unterflurverkabelung von Starkstromnetzen anzugeben, welches eine schnelle und ohne Fachpersonal durchzuführende Montage ermöglicht.

Diese Aufgabe wird gelöst durch ein Anschlusssystem mit den Merkmalen des Anspruchs 1.

Der entscheidende Zeitvorteil wird bei der vorliegenden Erfindung durch den in die Stirnseite des Anschlussmoduls eingesetzten Anschlussstecker erreicht, in den zur Verbindung mit der Gebäudeinstallation fertig konfektionierte Verbindungskabel eingesteckt werden können. Dieses Einstecken von konfektionierten Kabeln kann von Hilfspersonal oder auch vom Bewohner des Gebäudes selbst durchgeführt werden, ohne dass die elektrische Sicherheit darunter leidet.

Dank der Anordnung des Anschlusssteckers in der Stirnfläche des Anschlussmoduls ist der Stecker auch stets gut zugänglich. Das gilt insbesondere dann, wenn gemäß einer Weiterbildung der Erfindung der Unterflurtank Aussparungen für den Anschlussstecker besitzt.

Eine platzsparende Anordnung ergibt sich, wenn der Anschlussstecker als Kaltgerätestecker und vorzugsweise als Flachstecker ausgebildet ist.

Eine noch platzsparendere Anordnung ergibt sich, wenn die Steckdosen drehbar sind. Eine Steckdose mit drehbaren Steckertöpfen ist beispielsweise bekannt aus der EP 1 139 511 A.

Für eine einfache, schnelle und bequeme Montage und insbesondere Demontage kann eine der Halterungen des Moduls längs verschiebbar sein.

Anhand der Zeichnung soll die Erfindung in Form eines Ausführungsbeispiels näher erläutert werden. Es zeigen in isometrischer Darstellung
- Fig. 1: ein Anschlussmodul mit angesteckten Verbindungskabeln und
- Fig. 2: das Anschlussmodul der Fig. 1, eingesetzt in einen Unterflurtank.

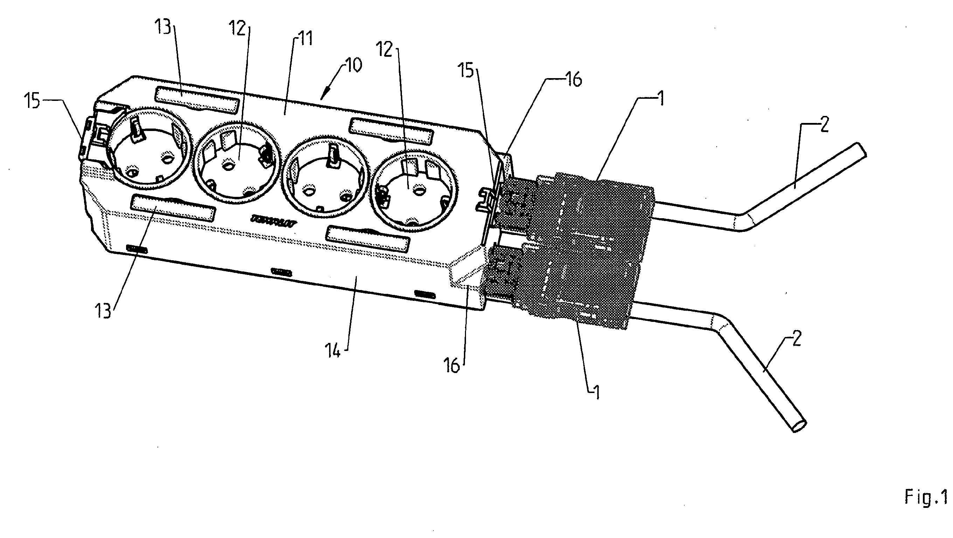

Fig. 1 zeigt ein langgestrecktes, quaderförmiges Anschlussmodul 10. Das Gehäuse besteht aus einer Frontplatte 11 mit vier Steckertöpfen 12 und einem becherförmigen Unterteil 14. Frontplatte 11 und Unterteil 14 sind verrastet. Die Frontplatte 11 trägt Bezeichnungsfelder zur Kennzeichnung der Steckertöpfe 12.

In eine Stirnseite des Moduls 10 sind zwei Flachsteckkupplungen 16 eingeformt, in die zwei Flachstecker 1 mit ankonfektioniertem Kabel 2 eingesteckt sind. Die Flachsteckkupplungen 16 sind intern mit einem oder mehreren der Steckertöpfe 12 verschaltet.

An den Stirnseiten des Moduls 10 sind des weiteren Halterungen 15, 15' angeformt, mit deren Hilfe das Modul 10 in einem Unterflurtank 3 montiert wird. Die eine Halterung 15 ist längs verschiebbar für eine einfache, schnelle und bequeme Montage und insbesondere Demontage.

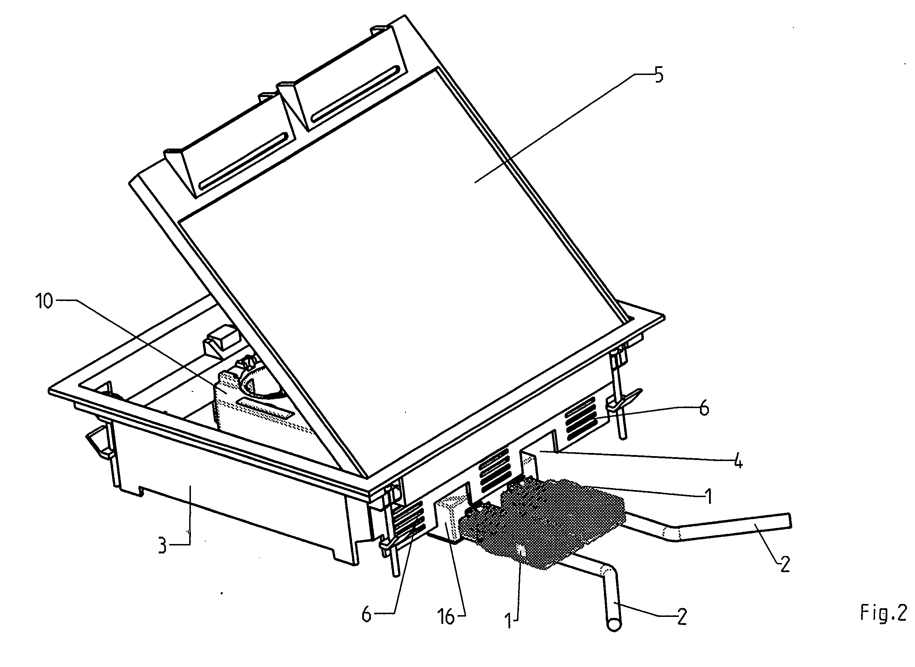

Diese Situation ist in Fig. 2 dargestellt. Der Unterflurtank besteht aus einem rahmenförmigem Gehäuse 3, an dem ein Deckel 5 angelenkt ist. Gegenüberliegende Stirnseiten des Rahmens 3 sind mit Rasteinrichtungen 6 ausgerüstet, die mit den Halteeinrichtungen 15 des Anschlussmoduls 10 kooperieren.

Fig. 2 zeigt in den Rahmen 3 eingeformte Aussparungen 4, durch die die Flachsteckkupplungen 16 zugänglich sind.

## Patentansprüche

1. Anschlusssystem für die Unterflurverkabelung von Starkstromnetzen, wenigstens umfassend
- ein Anschlussmodul (10) mit
― einem zwei- oder mehrteiligen Gehäuse (11, 14),
― Starkstrom-Steckdosen (12)
― und angeformte Halterungen (15, 15'),
- und einen Unterflurtank (3) mit
― Einrichtungen (6) zum Befestigen der Anschlussmodule (10)
― und einem Deckel (5),
**gekennzeichnet durch** die Merkmale:
- in wenigstens einer Stirnseite des Anschlussmoduls (10) ist wenigstens ein Anschlussstecker (16) für ein konfektioniertes Kabel (1, 2) zur Verbindung mit der Gebäudeinstallation vorgesehen.

2. Anschlusssystem nach Anspruch 1, **gekennzeichnet durch** das Merkmal:
- der Anschlussstecker (16) ist ein Flachstecker.

3. Anschlusssystem nach Anspruch 1 oder 2, **gekennzeichnet durch** das Merkmal:
- der Unterflurtank (3) besitzt Aussparungen (4) für den Anschlussstecker (16).

4. Anschlusssystem nach einem der Ansprüche 1 bis 3, **gekennzeichnet durch** das Merkmal:
- den Steckdosen (12) sind Beschriftungsfelder (13) zugeordnet.

5. Anschlusssystem nach einem der Ansprüche 1 bis 4, **gekennzeichnet durch** das Merkmal:
- die Steckdosen (12) sind drehbar.

6. Anschlusssystem nach einem der Ansprüche 1 bis 5, **gekennzeichnet durch** das Merkmal:
- eine der Halterungen (15) ist längsverschiebbar.
